Europäisches Patentamt

European Patent Office

Office européen des brevets

(19)

(11) Veröffentlichungsnummer: **0 219 669**
**B1**

(12) # EUROPÄISCHE PATENTSCHRIFT

(45) Veröffentlichungstag der Patentschrift: · 
07.12.88

(51) Int. Cl.⁴: **F 02 M 51/06**

(21) Anmeldenummer: **86112343.8**

(22) Anmeldetag: **06.09.86**

(54) Zumessventil zur Dosierung von Flüssigkeiten oder Gasen.

(30) Priorität: **24.09.85 DE 3533975**

(43) Veröffentlichungstag der Anmeldung:
**29.04.87 Patentblatt 87/18**

(45) Bekanntmachung des Hinweises auf die Patenterteilung:
**07.12.88 Patentblatt 88/49**

(84) Benannte Vertragsstaaten:
**DE FR GB**

(56) Entgegenhaltungen:
**DE-A- 1 751 543**
**DE-A- 1 809 465**
**DE-A- 2 917 933**
**DE-A- 3 422 935**
**FR-A- 2 491 270**
**GB-A- 2 056 559**
**GB-A- 2 165 308**

(73) Patentinhaber: **ROBERT BOSCH GMBH, Postfach 50,
D-7000 Stuttgart 1 (DE)**

(72) Erfinder: **Schlagmüller, Walter, Frankestrasse 39,
D-7141 Schwieberdingen (DE)**

ACTORUM AG

## Beschreibung

### Stand der Technik

Die Erfindung geht aus von einem Zumessventil zur Dosierung von Flüssigkeiten oder Gasen, insbesondere Einspritzventil für Kraftstoff-Einspritzsystemen in Brennkraftmaschinen, wie direkt einspritzende Dieselmotoren und dgl., nach der Gattung des Anspruchs 1.

Bei einem bekannten Einspritzventil dieser Art (GB-A-2 056 559) ist das Widerlager als Dämpfungskolben ausgebildet, der in einem kraftstoffgefüllten Dämpfungszylinder angeordnet ist. Der Dämpfungszylinder steht über eine Bohrung mit dem Kraftstoffzulauf in Verbindung. Der Dämpfungskolben ist durch die in dem Dämpfungszylinder einliegende Ventilschliessfeder an den Piezostack angelegt, der dadurch wiederum die Ventilnadel auf den die Einspritzöffnung umgebenden Ventilsitz aufgepresst, die ihrerseits die Einspritzöffnung absperrt. Wenn an das piezoelektrische Stellglied eine Steuerspannung gelegt wird, kontraktiert der Piezostack und verkürzt seine Länge um beispielsweise 30μm. Die Masse des Dämpfungskolbens und die Dämpfungswirkung des Kraftstoffes in dem Dämpfungszylinder bewirken, dass das Widerlager für den Moment der Piezostack-Kontraktion weitgehend stationär fest ist und die Kontraktion des Piezostacks keine Verschiebung des Dämpfungskolbens durch die Ventilschliessfeder auslöst. Als Folge dessen wird die gesamte Längenänderung des Piezostacks in eine Hubbewegung der Ventilnadel umgesetzt, so dass der relativ kleine Stellweg des Piezostacks vollständig zur Öffnung des Einspritzventils ausgenutzt wird.

Ist das Einspritzventil geschlossen, so bewirken Längenänderungen des Piezostacks durch Temperaturänderung oder Längendifferenzen des Gesamtsystems von Ventilnadel, Piezostack, und Dämpfungskolben durch Verschleiss oder Fertigungstoleranzen eine entsprechende Verschiebung des Dämpfungskolbens. Da dadurch die gehäuseseitige Abstützung des Piezostacks bei der Ventilbetätigung verlegt wird, werden diese Einflüsse vollständig kompensiert und wirken sich nicht auf den Hubweg der Ventilnadel und damit auf den von der Ventilnadel freigegebenen Einspritzquerschnitt aus. Die Zumessdosierung und damit die Einspritzmenge ist weitgehend unabhängig von Temperatur, Fertigungstoleranzen oder Verschleiss und nahezu konstant. Eine weitgehende Reproduktion der eingespritzten Kraftstoffmenge ist damit garantiert.

Es hat sich gezeigt, dass dieses bekannte Konstruktionsprinzip zur Festlegung des Widerlagers des Piezostacks während der Zumessphase sich nicht auf piezoelektrische Stellglieder übertragen lässt, bei welchen der Stellweg durch Längenausdehnung des Piezostacks generiert wird. In solchen Fällen bewirkt die bei der Expansion des Piezostacks auf den Dämpfungskolben wirkende Druckkraft eine im Vergleich zu dem relativ kleinen Stellweg des Piezostacks von typischerweise 20 μm merkliche Verschiebung des Dämpfungskolbens, zumal eine Teilmenge des in dem Dämpfungszylinder befindlichen Kraftstoffs nahezu ungedrosselt und damit sehr schnell über die Bohrung in den Kraftstoffzulauf ausgeschoben werden kann. Selbst bei starker Drosselung des Kraftstoffabflusses kann nicht davon ausgegangen werden, dass nicht Kleinmengen schnell genug abströmen können oder dass das in dem Dämpfungszylinder sich befindliche Flüssigkeitsvolumen völlig ohne Gaseinschlüsse und damit inkompressibel ist. Eine grosse Masseträgheit des Dämpfungskolbens lässt sich nur bedingt ausnutzen und vergrössert zudem das Bauvolumen des Ventils beträchtlich.

Jede — wenn auch nur geringfügige — Verschiebung des Dämpfungskolbens und damit des gehäuseseitigen Widerlagers des Piezostacks bei der Ventilöffnung führt aber zu einem veränderten Hubweg der Ventilnadel und zu einer Veränderung des Öffnungs- und Zumessquerschnittes des Ventils. Die Dosierung von insbesondere kleinen Zumessmengen ist damit ungenau und in jeder Zumessphase anders. Damit lässt sich weder die geforderte Zumessgenauigkeit noch die geforderte Zumesskonstanz in Abhängigkeit von der Ventilöffnungszeit erreichen.

### Vorteile der Erfindung

Das erfindungsgemässe Zumessventil zur Dosierung von Flüssigkeiten oder Gasen mit den kennzeichnenden Merkmalen des Anspruchs 1 hat demgegenüber den Vorteil, dass durch die toleranzfreie Festlegung der gehäuseseitigen Abstützung für den Piezostack immer die volle Längenausdehnung des Piezostacks in einen Hubweg der Ventilnadel umgesetzt, damit immer der gleiche Zumessquerschnitt freigegeben und somit eine extrem genaue Dosierung eingehalten wird. Hierbei ist es gleichgültig, ob das piezoelektrische Stellglied den Stellweg durch Längenausdehnung oder Längenreduzierung des Piezostacks generiert. Die Zumessgenauigkeit ist beliebig reproduzierbar, wobei die Zumessmenge bei vorgegebenem Zumessdruck ausschliesslich von der Dauer der Ventilöffnung abhängt. Die elektromagnetische Arretiervorrichtung hat zudem ein nur kleines Bauvolumen und kann damit mühelos in das Ventilgehäuse eines kleinvolumigen Zumessventils integriert werden.

Durch die in den weiteren Ansprüchen aufgeführten Massnahmen sind vorteilhafte Weiterbildungen und Verbesserungen des im Anspruch 1 angegebenen Zumessventils möglich.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:

Fig. 1 einen Längsschnitt eines Einspritzventils für eine Brennkraftmaschine, ausschnittsweise,

Fig. 2 einen Schnitt längs der Linie II-II in Fig. 1,

Fig. 3 einen Längsschnitt eines Einspritzventils gemäss einem weiteren Ausführungsbeispiel.

### Beschreibung und Ausführungsbeispiele

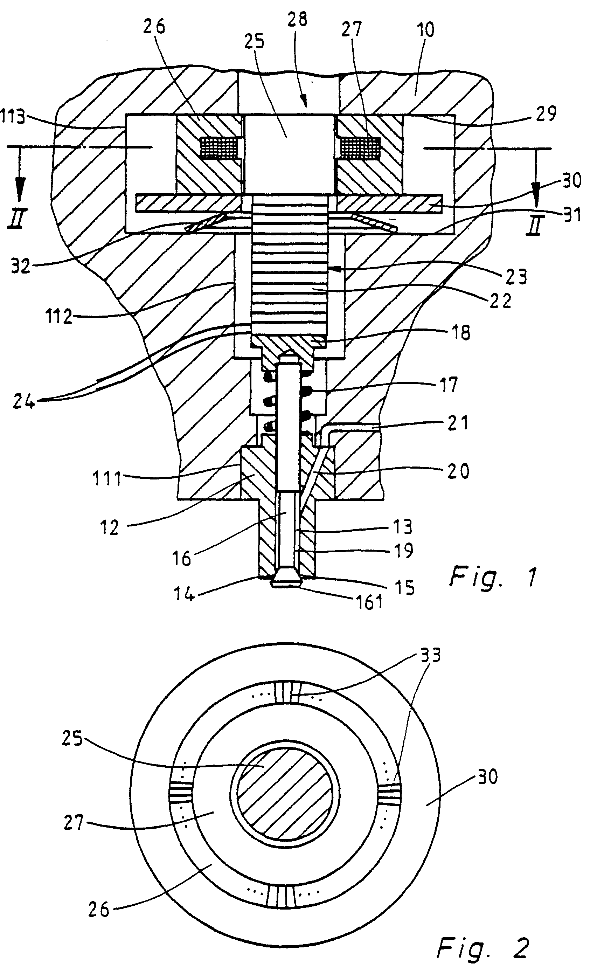

Mit dem in Fig. 1 als Beispiel für ein Zumessventil zur Dosierung von Flüssigkeiten oder Gasen im Längsschnitt dargestellten Einspritzventil für Kraftstoffeinspritzanlagen in Brennkraftmaschinen können die wesentlichen Grössen wie Einspritzmenge, Einspritzrate, Spritzbeginn und Spritzende elektrisch bestimmt werden. Das Einspritzventil weist ein ausschnittweise dargestelltes Ventilgehäuse 10 auf, in welchem eine Stufenbohrung mit im Durchmesser abgestuften Bohrungsabschnitten eingebracht ist. Im unteren brennraumseitigen Bohrungsabschnitt 111 ist ein Ventilkörper 12 mit einer axialen Durchgangsbohrung 13 eingesetzt. Die Durchgangsbohrung mündet in einer Zumess- oder Ventilöffnung 14, die von einem Ventilsitz 15 ringförmig umgeben ist. Eine in der Durchgangsbohrung 13 geführte Ventilnadel 16 sitzt mit ihrem im Durchmesser vergrösserten Nadelkopf 161 unter Wirkung einer Ventilschliessfeder 17 auf dem Ventilsitz 18 auf und dichtet die Ventilöffnung 14 ab. Die Ventilschliessfeder 17 stützt sich einerseits am Ventilkörper 12 und andererseits an einem Ringflansch 18 ab, der an dem vom Nadelkopf 161 abgekehrten Ende der Ventilnadel 16 mit dieser starr verbunden ist. Unmittelbar vor dem Ventilsitz 15 ist in der Durchgangsbohrung 13 ein Ringraum 19 vorhanden, der über eine Zulaufbohrung 20 mit einem Kraftstoffzulauf 21 verbunden ist. Um beim Einspritzvorgang einen zu grossen Druckabfall zu verhindern ist zweckmässigerweise zwischen der Zulaufbohrung 20 und dem Kraftstoffzulauf 21 ein Speicher eingeschaltet. Als ein solcher Speicher kann der mittlere Bohrungsabschnitt 112 dienen.

Im mittleren Bohrungsabschnitt 112 ist ein Piezostack 22 eines piezoelektrischen Stellgliedes 23 angeordnet, dem über elektrische Zuleitungen 24 eine Erregerspannung zugeführt werden kann. Bei Anlegen einer Erregerspannung vergrössert der Piezostack 22 in bekannter Weise seine axiale Länge, wobei die Längenänderung typischerweise etwa 30 µm beträgt. Der üblicherweise aus einzelnen piezoelektrischen Scheiben zusammengesetzte Piezostack 22 ist an seiner einen Stirnseite fest mit dem Ringflansch 18 verbunden und trägt an seiner anderen Stirnseite einen zylinderförmigen Anker 25, der vollständig in das Innere eines hohlzylindrischen Joches 26 mit geringem radialen Spiel eintaucht. Im Joch 26 ist eine ringförmige Erregerspule 27 gehalten. Der Anker 25, das Joch 26 und die Erregerspule 27 bilden eine elektromagnetische Arretiervorrichtung 28, mit welcher der Piezostack 22 während seiner durch die Steuerspannung bewirkten Längenänderung bezüglich des Ventilgehäuses 10 räumlich festgelegt wird. Die Festlegung des Piezostacks 22 erfolgt durch Wirksamschalten der Arretiervorrichtung 28 zumindest für die Dauer der Ventilöffnung.

Die elektromagnetische Arretiervorrichtung 28 ist in dem dritten Bohrungsabschnitt 113 untergebracht, wobei das Joch 26 zwischen einer ventilgehäuseseitigen Ringschulter 29 und einer Stützscheibe 30 gehalten ist. Zwischen der Stützscheibe 30 und einer weiteren Ringschulter 31 des Ventilgehäuses 10 ist eine Tellerfeder 32 eingelegt, welche das Joch 26 im Bohrungsabschnitt 113 festlegt. Wie in Fig. 2 angedeutet ist, ist das Joch 26 in eine Vielzahl von im Profil U-förmigen Jochblechen 33 unterteilt, die sich bei Strombelegung der Erregerspule 27 auf dem Anker 25 abstützen und ihn damit stationär festklemmen. Anstelle der Jochbleche 33 kann das Joch 26 auch in grössere Jochsegmente unterteilt sein, wobei bereits eine Unterteilung des Jochs in zwei halbkreisförmige Ringsegmente genügt. Im letzteren Fall muss jedoch bei der Halterung des Joches 26 zwischen Ringschulter 29 und Stützscheibe 30 für eine geringfügige Radialbewegung des Joches 26 Sorge getragen werden. Ein solches Spiel kann durch entsprechende Bemessung der Tellerfeder 32 gewährleistet werden.

Die Steuerung der elektromagnetischen Arretiervorrichtung 28 ist so getroffen, dass die Erregerspule 27 ständig mit Erregerstrom beaufschlagt ist und nur nach Einspritzende, also nach Wiederverschliessen der Ventilöffnung 14, kurzzeitig stromlos wird. In diesem stromlosen Zustand der Erregerspule 27 ist die Arretiervorrichtung 28 wirkungslos und der Anker 25 kann sich im Joch 26 axial verschieben. Dadurch werden temperaturbedingte Längenänderungen des Piezostacks 22 ebenso wie Fertigungstoleranzen oder Verschleiss kompensiert. Im Moment der Ventilöffnung liegt der Piezostack 22 jedoch gehäuseseitig fest, so dass der von dem Piezostack 22 jeweils zur Verfügung gestellte konstante Stellweg vollständig für den Ventilnadelhub ausgenutzt werden kann.

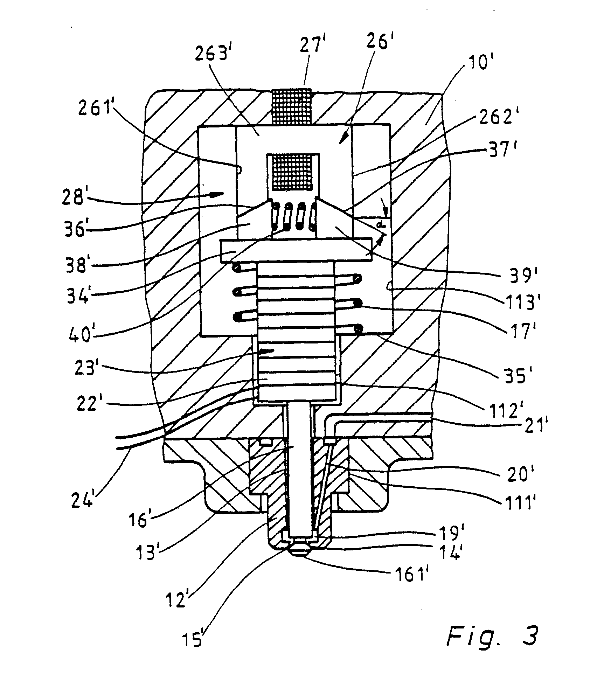

Das in Fig. 3 im Längsschnitt zu sehende Einspritzventil unterscheidet sich von dem in Fig. 1 dargestellten Einspritzventil nur durch eine unterschiedliche Ausbildung der elektromagnetischen Arretiervorrichtung 28', so dass mit Bauteilen in Fig. 1 übereinstimmende Bauteile in Fig. 3 mit gleichen Bezugszeichen versehen, jedoch zur Unterscheidung durch einen Beistrich gekennzeichnet sind.

Der Piezostack 22' ist auf seiner einen Stirnseite wiederum unmittelbar mit der Ventilnadel 15' verbunden und trägt auf seiner anderen Stirnseite eine Ankerplatte 34' mit vergrössertem Durchmesser. Die Ventilschliessfeder 17' ist hier zwischen der Ankerplatte 34' und einer gehäuseseitigen Abstützung 35' angeordnet und bewirkt in gleicher Weise ein Aufpressen des Nadelkopfes 161' der Ventilnadel 16' auf den die Ventilöffnung 14' umgebenden Ventilsitz 15'. Das Joch 26' der elektromagnetischen Arretiervorrichtung 28' ist hier hufeisenförmig ausgebildet und trägt auf seinem die beiden Schenkel 261' und 262' einstückig verbindenden Steg 263' die ringförmige Erregerspule 27'. Die Schenkel 261' und 262' sind rechtwinkelig zur Ankerplatte 34' angeordnet. Ihre Stirnflächen 36' bzw. 37' verlaufen unter einem spitzen Neigungswinkel α zur Ankerplatte 34'. Zwischen der Ankerplatte 34' und den Jochschenkeln 261' und 262' ist jeweils ein Keilelement 38' bzw. 39' angeordnet. Jedes Keilelement 38' bzw. 39' weist zwei Keilflächen auf, wovon eine Keilfläche parallel zur Ankerplatte 34' und eine Keilfläche parallel zur Stirnfläche 36 bzw. 37 der Jochschenkel 261' bzw. 262' verläuft. Mit diesen Keilflächen liegt jedes Keilelement 38' bzw. 39' einerseits an der Ankerplatte 34' und andererseits an der Stirnfläche 36' bzw. 37' der Jochschenkel 261' bzw. 262' an. Zwischen den beiden Keilelementen 38' und 39' ist eine Druckfeder 40' angeordnet, deren Wirkrichtung parallel zur Ankerplatte 34' verläuft. Der Neigungswinkel α der Stirnflächen 36', 37' der Jochschenkel 261', 262' und damit der Keilwinkel der Keilelemente 38', 39' ist grösser gewählt als der Haftreibungswinkel ρ. Je mehr der Neigungswinkel

α dem Haftreibwinkel ρ angenähert wird, desto kleiner kann der von Joch 26' und Erregerspule 27' gebildete Elektromagnet ausgeführt werden.

Die Ansteuerung der Energiespule 27' ist so getroffen, dass sie von kurz nach Spritzende bis kurz vor Spritzbeginn stromlos ist und nur für die Dauer der Ventilöffnung bestromt wird. Dadurch wird wiederum der Piezostack 22 während seiner Erregungsphase gehäuseseitig fixiert. Bei stromlosem Magneten werden Relativbewegungen des aus Ventilnadel 16', Piezostack 22' und Ankerplatte 34' bestehenden einteiligen Ventilbetätigungssystems, die jedoch hauptsächlich durch temperaturbedingte Längenänderungen des Piezostacks 22 hervorgerufen werden, dadurch kompensiert, dass die Keilelemente 38', 39' radial an der Ankerplatte 34' nach aussen oder innen verschoben werden. Eine Reduzierung der Länge des Piezostacks 22' bewirkt dabei eine durch die Druckfeder 40' hervorgerufene Auswanderung der Keilelemente 38', 39' nach aussen, während eine Vergrösserung der axialen Länge des Piezostacks 22' ein Nachinnengleiten der Keilelemente 38', 39' entgegen der Wirkung der Druckfeder 40' auslöst. In gleicher Weise werden Fertigungstoleranzen oder Verschleiss in dem Betätigungssystem aus Ventilnadel 16', Piezostack 22' und Ankerplatte 34' sowie in den Keilelementen 38', 39' und dem Joch 26' ausgeglichen. Auch Fertigungstoleranzen bei der Befestigung des Jochs 26' im Bohrungsabschnitt 113' werden kompensiert.

Der Vorteil der in Fig. 3 dargestellten elektromagnetischen Arretiervorrichtung 28' gegenüber der in Fig. 1 zu sehenden Arretiervorrichtung 28 liegt darin, dass die Reaktionskräfte des Piezostacks 22 mit einem wesentlich kleineren Elektromagneten aufgefangen werden können. Damit lässt sich das Bauvolumen der elektromagnetischen Arretiervorrichtung 28' sehr klein halten, was einer Integration in das Ventilgehäuse 10 bzw. 10' entgegenkommt.

**Patentansprüche**

1. Zumessventil zur Dosierung von Flüssigkeiten oder Gasen, insbesondere Einspritzventil für Kraftstoff-Einspritzsysteme in Brennkraftmaschinen, wie direkt einspritzende Dieselmotoren und dgl., mit einem Ventilgehäuse mit Zumessöffnung, mit einer die Zumessöffnung steuernden Ventilnadel, mit einer die Ventilnadel in ihre die Zumessöffnung sperrende Schliessstellung zurückführenden Ventilschliessfeder, mit einem piezoelektrischen Stellglied, dessen unter der Wirkung einer Steuerspannung längenveränderlicher Piezostack an seinem einen Ende mit der Ventilnadel und an dem anderen Ende mit einem Widerlager verbunden ist, das in Achsrichtung des Piezostacks verschiebbar und so ausgebildet ist, dass es bei durch die Steuerspannung bewirkter Längenänderung des Piezostacks relativ zum Gehäuse räumlich festliegt, dadurch gekennzeichnet, dass das Widerlager als elektromagnetische Arretiervorrichtung (28; 28') ausgebildet ist, die zumindest für die Dauer der Ventilöffnung wirksam geschaltet ist.

2. Ventil nach Anspruch 1, dadurch gekennzeichnet, dass die elektromagnetische Arretiervorrichtung (28) einen mit dem Piezostack (22) starr verbundenen stabförmigen Anker (25) eine den Anker (25) umgebende Erregerspule (27), deren axiale Länge wesentlich kleiner ist als die des Ankers (25), und ein die Erregerspule (27) aufnehmendes, gehäuseseitig fixiertes Joch (26) aufweist, das den Anker (25) unter Belassung eines ringförmigen Luftspaltes umschliesst und in einzelne, in Längsrichtung aneinanderliegende Jochsegmente oder Jochbleche (33) unterteilt ist, die sich bei strombelegter Erregerspule (27) auf dem Anker (25) abzustützen vermögen.

3. Ventil nach Anspruch 2, dadurch gekennzeichnet, dass der Anker (25) walzenflörmig, die Erregerspule (27) ringförmig und das Joch (26) hohlzylinderförmig ausgebildet ist und dass die Erregerspule (27) in dem Joch (26) einliegt.

4. Ventil nach Anspruch 2 oder 3, dadurch gekennzeichnet, dass die Jochbleche (33) U-Profil aufweisen.

5. Ventil nach einem der Ansprüche 2-4, dadurch gekennzeichnet, dass das Joch (26) auf der einen Stirnseite an einer ventilgehäuseseitigen Abstützung, vorzugsweise Ringschulter (29), anliegt und dass auf der anderen Stirnseite des Jochs (26) eine Stützscheibe (30) aufliegt, auf welcher sich eine gehäuseseitig sich abstützende Druckfeder, vorzugsweise Tellerfeder (32), aufpresst.

6. Ventil nach einem der Ansprüche 2-5, dadurch gekennzeichnet, dass die Strombelegung der Erregerspule (27) nach Zumessende kurzzeitig unterbrochen wird.

7. Ventil nach einem der Ansprüche 1-6, dadurch gekennzeichnet, dass die gehäuseseitig sich abstützende Ventilschliessfeder (17) an dem mit der Ventilnadel (16) verbundenen Ende des Piezostacks (22) angreift.

8. Ventil nach Anspruch 1, dadurch gekennzeichnet, dass die Arretiervorrichtung (28') eine mit dem Piezostack (22') starr verbundene, quer zum Piezostack (22') ausgerichtete Ankerplatte (34') ein Magnetjoch (26') mit einem die Erregerspule (27') tragenden Steg (263') und zwei damit einstückigen, der Ankerplatte (34') rechtwinklig gegenüberliegenden Jochschenkeln (261', 262'), deren Stirnflächen (36, 37) unter einem spitzen Neigungswinkel (α) zur Ankerplatte (34') verlaufen, und zwei zwischen der Ankerplatte (34') und den Jochschenkeln (261', 262') einliegende Keilelemente (38', 39') aufweist, die jeweils mit einer zur Ankerplatte (34') und der Stirnfläche (36', 37') des Jochschenkels (261', 262') parallelen Keilfläche an der Ankerplatte (34') und an der zugeordneten Jochschenkel-Stirnfläche (36', 37') anliegen.

9. Ventil nach Anspruch 8, dadurch gekennzeichnet, dass die schrägen Stirnflächen (36', 37') der Jochschenkel (261', 262') jeweils zum Steg (263') hin ansteigen und dass zwischen den beiden Keilelementen (38', 39') sich eine parallel zur Ankerplatte (34') ausgerichtete Druckfeder (40') abstützt.

10. Ventil nach Anspruch 8 oder 9, dadurch gekennzeichnet, dass die Erregerpule (27') während der Zumesspausen bis kurz vor Zumessbeginn stromlos ist.

11. Ventil nach einem der Ansprüche 8-10, dadurch gekennzeichnet, dass die gehäuseseitig sich abstützende Ventilschliessfeder (17') sich auf der den Keilelementen (38', 39') abgekehrten Seite der Ankerplatte (34') auf diese aufpresst.

12. Ventil nach einem der Ansprüche 8-11, dadurch gekennzeichnet, dass der Neigungswinkel (α) der schrägen Stirnflächen (36', 37') grösser als der Haftreibwinkel (ρ) und soweit wie möglich dem Haftreibwinkel (ρ) angenähert ist.

## Claims

1. Dosis valve for fluids or gases, in particular an injection valve for fuel-injection systems in internal combustion engines such as direct-injection diesel engines and the like, comprising a valve housing having a dosing opening, a valve needle controlling the dosing opening, a valve closing spring returning the valve needle into its closing position blocking the dosing opening, a piezoelectric actuator whose piezostack, which is variable in length under the action of a control voltage, is connected at one of its ends to the valve needle and at the other end to an abutment which is displaceable in the axial direction of the piezostack and is designed in such a way that it is fixed spatially relative to the housing when the control voltage produces a change in length in the piezostack, characterised in that the abutment is designed as an electromagnetic locking device (28; 28') which is actively operated at least for the valve-opening duration.

2. Valve according to Claim 1, characterised in that the electromagnetic locking device (28) has a bar-shaped armature (25), rigidly connected to the piezostack (22), an excitation coil (27) which surrounds the armature (25) and whose axial length is substantially smaller than that of the armature (25), and a yoke (26) which accomodates the excitation coil (27) and is fixed on the housing side, encloses the armature (25) while leaving an annular air gap and is subdivided into individual yoke segments or yoke laminations (33) which rest against one another in a longitudinal direction and are capable of being supported on the armature (25) when the excitation coil (27) is charged with current.

3. Valve according to Claim 2, characterised in that the armature (25) is of roller-shaped configuration, the excitation coil (27) is of annular configuration and the yoke (26) is of hollow-cylindrical configuration, and that the excitation coil (27) is enclosed in the yoke (26).

4. Valve according to Claim 2 or 3, characterised in that the yoke laminations (33) have a U-profile.

5. Valve according to any of Claims 2 to 4, characterised in that the yoke (26), on one end face, rests against a support which is on the valve housing side and is preferably an annular shoulder (26), and that a supporting disc (30), on which a compression spring presses which is supported on the housing side and is preferably a disc spring (32), rests on the other end face of the yoke (26).

6. Valve according to any of Claims 2 to 5, characterised in that the charge of current in the excitation coil (27) is briefly interrupted after the end of dosing.

7. Valve according to any of Claims 1 to 6, characterised in that the valve closing spring (17), supported on the housing side, acts on the end of the piezostack (22) connected to the valve needle (16).

8. Valve according to Claim 1, characterised in that the locking device (28') has an armature plate (34') rigidly connected to the piezostack (22') and aligned transversely to the piezostack (22'), a magnet yoke (26') having a web (263'), supporting the excitation coil (27'), and two yoke legs (261', 262') which are in one piece with the web (263'), are located at right angles opposite the armature plate (34') and whose end faces (36', 37') run at an acute angle (α) of inclination relative to the armature plate (34'), and two wedge elements ((38', 39') which are enclosed between the armature plate (34') and the yoke legs (261', 262') and, with a wedge surface parallel to the armature plate (34') and the end face (36', 37') of the yoke legs (261', 262'), in each case rest against the armature plate (34') and against the allocated yoke-leg end face (36', 37').

9. Valve according to Claim 8, characterised in that the sloping end faces (36', 37') of the yoke legs (261', 262') each rise towards the web (263'), and a compression spring (40') aligned parallel to the armature plate (34') is supported between the two wedge elements (38', 39').

10. Valve according to Claim 8 or 9, characterised in that the excitation coil (27') is dead during the dosing pauses until shortly before the start of dosing.

11. Valve according to any of Claims 8 to 10, characterised in that the valve closing spring (17') supported on the housing side, presses on the armature plate (34') on the side of the latter remote from the wedge elements (38', 39').

12. Valve according to any of Claims 8 to 11, characterised in that the angle (α) of inclination of the sloping end faces (36', 37') is larger than the static friction angle (ρ) and is brought as close as possible to the static friction angle (ρ).

## Revendications

1. Soupape de mesure pour doser les fluides ou les gaz, en particulier soupape d'injection pour des systèmes d'injection de carburant dans des moteurs à combustion interne, tels que des moteurs Diesel à injection directe et similaires, avec un carter de soupape possédant un orifice de dosage, avec un pointeau de soupape commandant cet orifice de dosage, avec un ressort de fermeture de soupape ramenant dans la position obturant l'orifice de dosage, avec un organe de réglage piézo-électrique, dont un piézo-élément, de longueur variable sous l'action d'une tension de commande, est relié, à une de ses extrémités, au pointeau de soupape et, à l'autre extrémité, à une butée, qui est décelable en direction axiale du piézo-élément et configurée de telle sorte qu'elle est fixée dans l'espace, relativement au carter, par la modification de longueur du piézo-élément qui est provoquée par la tension de commande, caractérisée en ce que la butée (28; 28') est conformée en dispositif d'arrêt electromagnétique, qui est branché de manière efficace, au moins pour la durée de l'ouverture de la soupape.

2. Soupape selon la revendication 1, caractérisée en ce que le dispositif d'arrêt électromagnétique (28) possède un induit (25) en forme de barreau et relié rigidement au piézo-élément (22), une bobine d'excitation (27) entourant l'induit (25), dont la longueur axiale est notablement plus petite que celle de l'induit (25) et une culasse (26), fixée côté carter, recevant la bobine d'excitation (27) et qui entoure l'induit (25) en laissant subsister un entrefer de forme annulaire et est subdivisé en segments de culasse, ou en tôles de culasse (33) individuelles, qui sont situés les uns sur les autres dans la direction longitudinale et qui peuvent s'appuyer sur l'induit (25) dans le cas dans lequel la bobine d'excitation (27) est soumise à un courant.

3. Soupape selon la revendication 2, caractérisée en ce que l'induit (25) est conformé en forme de rouleau, la culasse (26) en forme de cylindre creux et que la bobine d'excitation (27) est à l'intérieur de la culasse (26).

4. Soupape selon la revendication 2 ou 3, caractérisée en ce que les tôles de culasse (33) possèdent un profil en forme de U.

5. Soupape selon l'une des revendications 2 à 4, caractérisée en ce que la culasse (26) repose sur un côté frontal, sur un appui qui est situé du côté du carter de soupape, avantageusement un épaulement annulaire (29) et qu'une rondelle d'appui (30) repose de l'autre côté frontal de la culasse (26) et sur lequel presse un ressort de pression, avantageusement un ressort à disques (32), qui s'appuie du côté du carter.

6. Soupape selon l'une des revendications 2 à 5, caractérisée en ce que la mise sous courant de la bobine d'excitation (27) est interrompue peu après la fin du dosage.

7. Soupape selon l'une des revendication 1 à 6, caractérisée en ce que le ressort de fermeture de soupape (17), qui s'appuie du côté du carter, engrène à l'extrémité du piézo-élément (22) qui est liée au pointeau de soupape (16).

8. Soupape selon la revendication 1, caractérisée en ce que le dispositif d'arrêt (28') possède une plaque d'induit (34') qui est reliée rigidement au piézo-élément (22') et orienté transversalement par rapport au piézo-élément (22'), une culasse d'aimant (26') avec une nervure (263') portant la bobine d'excitation (27') et deux montants de culasse (261', 262') situés de manière opposée et à angle droit par rapport à la plaque d'induit (34'), en une seule pièce, dont les faces frontales (36', 37') se développent sous un angle d'inclinaison α par rapport à la plaque d'induit (34') qui est aigu, et deux éléments en coin (38', 39') qui sont situé à l'intérieur, entre la plaque d'induit (34') et les montants de culasse (261', 262') et qui à chaque fois appuient avec une face en coin qui est parallèle à la plaque d'induit (34') et à la face frontale (36', 37') du montant de culasse (261', 262'), sur la plaque d'induit (34') et sur la face frontale de montant de culasse (36', 37') qui lui est affectée.

9. Soupape selon la revendication 8, caractérisée en ce que les faces frontales (36', 37') inclinées des montants de culasse (261', 262') montent chacune vers la nervure (263') et qu'un ressort de pression (40), qui est orienté parallèlement à la plaque d'induit (34'), s'appuie entre les deux éléments en coin (38', 39').

10. Soupape selon la revendication 8 ou 9, caractérisée en ce que la bobine d'excitation (27') est sans courant pendant les pauses de dosage, jusqu'à peu avant le début du dosage.

11. Soupape selon l'une des revendications 8 à 10, caractérisée en ce que le ressort de fermeture de soupape (17'), qui s'appuie du côté du carter, s'appuie sur la plaque d'induit (34'), du côté qui est opposé aux éléments en coin (38', 39').

12. Soupape selon l'une des revendications 8 à 11, caractérisée en ce que l'angle d'inclinaison α des faces frontales (36', 37') inclinées est plus important que l'angle de frottement ρ et que pour autant que cela est possible, il est proche de l'angle de frottement ρ.

Fig. 1

Fig. 2

*Fig. 3*